# EUROPÄISCHE PATENTSCHRIFT

(11) **EP 2 130 072 B1**
(45) Veröffentlichungstag und Bekanntmachung des Hinweises auf die Patenterteilung: **24.10.2018**
(21) Anmeldenummer: 08706792.2
(22) Anmeldetag: 23.01.2008
(51) Int. Cl.: G02B 6/00, F21V 8/00

(54) **ANORDNUNG MIT EINEM HALBLEITERCHIP UND EINER LICHTLEITERSCHICHT**
ARRANGEMENT COMPRISING A SEMICONDUCTOR CHIP AND AN OPTICAL WAVEGUIDE LAYER
SYSTÈME COMPRENANT UNE PUCE SEMI-CONDUCTRICE ET UNE COUCHE DE GUIDAGE DE LA LUMIÈRE

(30) Priorität: 06.03.2007 DE 102007010755
(43) Veröffentlichungstag der Anmeldung: 09.12.2009
(73) Patentinhaber: OSRAM Opto Semiconductors GmbH, 93055 Regensburg (DE)
(72) Erfinder: HERRMANN, Siegfried, 94362 Neukirchen (DE); HAHN, Berthold, 93155 Hemau (DE); SORG, Joerg, 93053 Regensburg (DE); GRUBER, Stefan, 93077 Bad Abbach (DE)
(74) Vertreter: Epping - Hermann - Fischer
(86) Internationale Anmeldenummer: PCT/DE2008/000124
(87) Internationale Veröffentlichungsnummer: WO 2008/106915

(56) Entgegenhaltungen:
- DE-A1-102005 042 523
- US-A1- 2001 003 504
- US-A1- 2005 265 029
- US-A1- 2006 002 150
- US-A1- 2006 072 339
- US-B1- 6 371 623
- US-B1- 6 598 987

## Beschreibung

Diese Patentanmeldung beansprucht die Priorität der deutschen Patentanmeldung 10 2007 010 755.4.

Die Erfindung betrifft eine Anordnung mit einem Halbleiterchip, der dazu eingerichtet ist, im Betrieb Licht zu emittieren, und einer Abdeckschicht, die einer lichtabstrahlenden Oberfläche auf einer Oberseite des Halbleiterchips gegenüber liegt, so dass von dem Halbleiterchip abgestrahltes Licht in die Abdeckschicht eindringt.
Derartige Anordnungen entsprechen einem üblichen Aufbau von Halbleiterbauelementen, wobei die Abdeckschicht den Halbleiterchip schützt und für eine Auskopplung des Lichts sorgt. Die Druckschrift US 6,598,987 B1 beschreibt eine Anordnung mit einem Lichtleiter zur Beleuchtung eines Benutzerbereichs eines elektronischen Bauteils. Der Lichtleiter umfasst ein aufgebrachtes Muster mit unterschiedlichen Brechungsindices zur Beeinflussung der Ein- und Auskopplung von Licht in den Lichtleiter.
Die Druckschrift DE 102005042523 A1 beschreibt eine Beleuchtungseinrichtung zur Hinterleuchtung eines Displays mit einem Lichtleiter, welcher geeignet ist eine Hauptabstrahlrichtung einer elektromagnetischen Strahlung zu ändern.

Ein Anwendungsgebiet von lichtemittierenden Halbleiterbauelementen ist die Hinterleuchtung von Displays. Dazu muss das von einer Leuchtdiode erzeugte Licht auf eine große Fläche verteilt werden, wozu Lichtleiterplatten oder Lichtleiterfolien eingesetzt werden. Das Licht wird von einer solchen Lichtleiterplatte dabei über eine große Fläche von hinten auf die Rückseite einer Displayschicht abgestrahlt. Eine derartige Anordnung ist aus der JP 08007614 bekannt. Bei der dort gezeigten Anordnung wird Licht seitlich in die Lichtleiterplatte eingekoppelt. Eine Diffusorraster, das auf die Unterseite der Lichtleiterplatte aufgedruckt ist, sorgt für eine verbesserte Auskopplung des Lichts. Nachteilig an der gezeigten Anordnung ist, dass sie verhältnismäßig groß und aufwändig ist.

Die Aufgabe der Erfindung ist es, eine Anordnung mit einem Halbleiterchip anzugeben, die als Hinterleuchtungseinheit einsetzbar ist, und die dabei einfacher und kleiner aufgebaut ist.

Diese Aufgabe wird durch eine Anordnung gemäß Patentanspruch 1 gelöst. Demnach ist bei einer eingangs erwähnten Anordnung in einem sich mit dem Chip überschneidenden Bereich der Abdeckschicht eine Verspiegelung vorgesehen, durch die in die Abdeckschicht eingedrungenes Licht in Richtung der Längserstreckung der Abdeckschicht umgelenkt wird. Die Abdeckschicht wirkt dabei als Lichtleiter und ist dazu eingerichtet, das Licht verteilt über die Oberseite der Abdeckschicht abzustrahlen.

Durch die erfindungsgemäße Ausgestaltung der Anordnung ist diese klein und kann einstückig hergestellt werden. Es ist nicht notwendig, eine Leuchtdiode und eine Lichtleiterplatte zusammenzuschalten, sondern die Abdeckschicht des Halbleiterchips übernimmt gleichzeitig die Funktion als Lichtleiterplatte bzw. -folie. Die umlenkende Struktur sorgt dafür, dass in die Abdeckschicht eingekoppeltes Licht nicht in die gleiche Richtung abgestrahlt wird, sondern in die Abdeckschicht umgelenkt wird, so dass sie sich über der Längserstreckung der Abdeckschicht verteilt und so auch in von den Chip entfernten Bereichen der Abdeckschicht ausgekoppelt werden kann. Vorteilhaft ist, wenn eine optisch strukturierte Folie, die die Abdeckschicht beinhaltet, in direktem Kontakt mit der Halbleiteroberfläche ist bzw. mit einer Kontaktschicht fest mit der Halbleiteroberfläche verbunden ist. Die Folie und der Halbleiterchip bilden somit eine integrale Einheit.

In einer bevorzugten Ausgestaltung der Erfindung handelt es sich bei dem Halbleiterchip um einen substratlosen Dünnfilm-Chip. Gemäß der Erfindung weist der Halbleiterchip zwei entgegengesetzt liegende Hauptabstrahlrichtungen auf. Ein Dünnfilm-Leuchtdioden-Chip zeichnet sich insbesondere durch folgende charakteristische Merkmale aus:
- die Epitaxieschichtenfolge weist eine Dicke im Bereich von 20µm oder weniger, insbesondere im Bereich von 10 µm auf; und
- die Epitaxieschichtenfolge enthält mindestens eine Halbleiterschicht mit zumindest einer Fläche, die eine Durchmischungsstruktur aufweist, die im Idealfall zu einer annähernd ergodischen Verteilung des Lichtes in der epitaktischen Epitaxieschichtenfolge führt, d.h. sie weist ein möglichst ergodisch stochastisches Streuverhalten auf.

Ein Dünnfilm-Leuchtdioden-Chip ist in guter Näherung ein Lambert'scher Oberflächenstrahler.
Ein Grundprinzip eines Dünnschicht-Leuchtdioden-Chips ist beispielsweise in I. Schnitzer et al., Appl. Phys. Lett. 63 (16), 18. Oktober 1993, 2174 - 2176 beschrieben.

Die Ausgestaltung als Dünnfilm-Chip hat den Vorteil, dass die Anordnung sehr dünn ist. Die Ausgestaltung als beidseitig emittierender Chip hat den Vorteil, dass eine mit der erfindungsgemäßen Anordnung gebildete Hinterleuchtungseinheit in zwei Richtungen Licht abstrahlen kann oder, wenn nur in eine Richtung Licht abgestrahlt werden soll, Verluste in dem sonst verwendeten Substrat vermieden werden können.
In einer vorteilhaften Ausgestaltung der Erfindung ist auf der dem Halbleiterchip abgewandten Oberseite der Abdeckschicht eine Verspiegelung vorgesehen, so dass eine Abstrahlung in Hauptabstrahlrichtung des Halbleiterchips in dem Bereich über dem Halbleiterchip verhindert oder verringert ist. Die lichtumlenkende Struktur ist vorzugsweise durch optische Elemente realisiert, die in die Abdeckschicht integriert sind, wobei insbesondere Prismen, Linsen oder Beugungsgitter eingesetzt werden können. Die lichtumlenkende Struktur kann dabei in der Abdeckschicht selber, aber auch auf der Schicht gebildet sein oder zwischen dem Halbleiterchip und der Abdeckschicht.
Weiterhin ist es möglich, zur Lichtumlenkung eine Schicht aus einem photonischen Kristall vorzusehen. Auch ist es möglich, dass die Abdeckschicht eine holographische Strukturierung aufweist.

Weiterhin ist vorteilhaft, Oberflächen- oder Volumendiffusoren in beziehungsweise auf der Abdeckschicht vorzusehen. Durch die Diffusoren wird Licht in verschiedene Richtungen gestreut, so dass eine besonders gleichmäßige Abstrahlcharakteristik entsteht.

In einer vorteilhaften Weiterbildung der Erfindung ist als Abdeckschicht eine Kombination mehrerer Folien vorgesehen, die eine unterschiedliche Strukturierung und/oder unterschiedliche Brechungsindizes aufweisen. Die Grenzfläche zwischen den Folien bewirkt dabei zusätzliche Reflexionen und Brechungen.

Besonders günstig ist auch, in einer Schicht zwischen der Oberfläche des Halbleiterchips und der Abdeckschicht eine elektrisch leitende Struktur vorzusehen zur Kontaktierung des Halbleiterchips.

In einer anderen vorteilhaften Weiterbildung kann in der Abdeckschicht ein Konvertermaterial vorgesehen werden, welches einen Leuchtstoff aufweist, der nach Anregung durch Licht einer ersten Wellenlänge Licht einer zweiten Wellenlänge emittiert. Dadurch ist es möglich, Mischlicht zu erzeugen, welches aus einer von dem Halbleiterchip emittierten Primärstrahlung und einer durch den Leuchtstoff erzeugten Sekundärstrahlung besteht. Solches Mischlicht kann beispielsweise weißes Licht sein, das zum Beispiel aus blauer Primärstrahlung und gelber Sekundärstrahlung besteht.

Weitere vorteilhafte Ausgestaltungen der Erfindung sind in den Unteransprüchen angegeben.

Gemäß der Erfindung ist die in Richtung der Abdeckschicht weisende Richtung eine Hauptabstrahlrichtung des Halbleiterchips.

Es wird weiter eine Anordnung angegeben, bei der der Halbleiterchip ein Dünnfilm-Chip ist, insbesondere ein substratloser Dünnfilm-Chip.

Es wird weiter eine Anordnung angegeben, bei der die Dicke des Halbleiterchips zwischen 7 und 150 µm liegt, vorzugsweise zwischen 7 und 20 µm.

Es wird weiter eine Anordnung angegeben, bei der die Abdeckschicht eine Folie ist, vorzugsweise aus einem optisch klaren transparenten Material oder einem halbklaren transparenten Material oder aus durchscheinenden Materialien.

Es wird weiter eine Anordnung angegeben, bei der auf der dem Halbleiterchip abgewandten Oberseite der Abdeckschicht eine Verspiegelung vorgesehen ist, die insbesondere im Wesentlichen die Größe der Licht abstrahlenden Oberfläche des Halbleiterchips aufweist.

Es wird weiter eine Anordnung angegeben, bei der auf der in Richtung des Halbleiterchips weisenden Seite der Abdeckschicht eine Verspiegelung außerhalb des Bereichs des Halbleiterchips vorgesehen ist.

Es wird weiter eine Anordnung angegeben, bei der die Abdeckschicht in direktem Kontakt mit der Oberfläche des Halbleiterchips ist.

Es wird weiter eine Anordnung angegeben, bei der in die Abdeckschicht optische Elemente integriert sind zur Lichtumlenkung, insbesondere Prismen, Linsen oder Beugungsgitter.

Es wird weiter eine Anordnung angegeben, bei der zur Lichtumlenkung eine Schicht aus einem photonischen Kristall vorgesehen ist.

Es wird weiter eine Anordnung angegeben, bei der die Dicke der Anordnung zwischen 30 und 300 µm liegt.

Es wird weiter eine Anordnung angegeben, bei der auf der Abdeckschicht Oberflächendiffusoren vorgesehen sind.

Es wird weiter eine Anordnung angegeben, bei der in der Abdeckschicht Volumendiffusoren vorgesehen sind.

Es wird weiter eine Anordnung angegeben, bei der in der Abdeckschicht eine holographische Strukturierung vorgesehen ist.

Es wird weiter eine Anordnung angegeben, bei der als Abdeckschicht eine Kombination mehrerer Folien vorgesehen ist, die eine unterschiedliche Strukturierung und/oder unterschiedliche Brechungsindizes aufweisen.

Es wird weiter eine Anordnung angegeben, bei der zwischen der Abdeckschicht und der Oberfläche des Halbleiterchips eine Schicht aus einem Koppelmedium vorgesehen ist.

Es wird weiter eine Anordnung angegeben, bei der die Schicht zwischen der Oberfläche des Halbleiterchips und der Abdeckschicht eine elektrisch leitende, optische Struktur beinhaltet zur elektrischen Kontaktierung des Halbleiterchips.

Es wird weiter eine Anordnung angegeben, bei der in der Abdeckschicht ein Konvertermaterial vorgesehen ist, welches aus einem Leuchtstoff besteht, der nach Anregung von Licht einer ersten Wellenlänge Licht einer zweiten Wellenlänge emittiert.

Es wird weiter eine Anordnung angegeben, bei der sowohl eine Strukturierung der Abdeckschicht als auch eine Schicht aus einem photonischen Kristall vorgesehen ist.

Gemäß der Erfindung ist der Halbleiterchip auch von unten mit der Abdeckschicht abgedeckt, und das vom Halbleiterchip nach oben und unten abgestrahlte Licht wird genutzt und an Verspiegelungen auf der Abdeckschicht reflektiert und dadurch in Längsrichtung der Abdeckschicht gezwungen.

Eine hier beschrieben Anordnung als Hinterleuchtung für ein Display Verwendung finden.

Die Erfindung wird nachfolgend anhand von Ausführungsbeispielen näher erläutert.

Es zeigt:
Figur 1 eine schematische Darstellung einer Anordnung eines Vergleichsbeispiels mit einem Halbleiterchip und einer lichtleitenden Abdeckschicht,
Figur 2 eine Anordnung eines Vergleichsbeispiels mit einer Verspiegelung auf der Oberseite der Abdeckschicht,
Figur 3 eine Anordnung mit einer Prismenstruktur in der Abdeckschicht,
Figur 4 eine Anordnung mit Volumendiffusoren in der Abdeckschicht,
Figur 5 eine Anordnung mit einem Mehrschichtaufbau und einer Prismenstruktur,
Figuren 6A bis 6F verschiedene Beispiele einer lichtumlenkenden Struktur,
Figur 7 ein weiteres Vergleichsbeispiel einer lichtumlenkenden Struktur,
Figur 8 eine erfindungsgemäße Anordnung mit einem beidseitig emittierenden Dünnfilm-Halbleiterchip,
Figur 9 eine Anordnung mit einer Konverterschicht,
Figur 10 eine Anordnung mit zwei Konverterschichten,
Figur 11 eine Anordnung mit flexiblen Leiterbahnen.

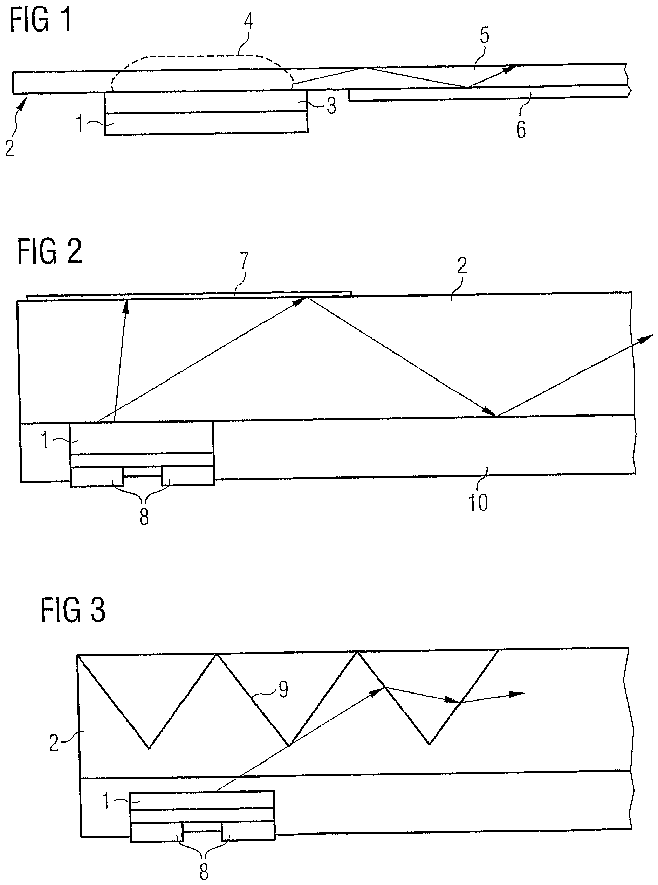

In der Figur 1 ist der grundsätzliche Aufbau einer Anordnung eines Vergleichsbeispiels mit einem Halbleiterchip und einer Abdeckschicht dargestellt. Der Halbleiterchip besteht aus einem Schichtenstapel, wobei in dem gezeigten Ausführungsbeispiel zwei Schichten dargestellt sind. Wenn der Halbleiterchip in Dünnfilmtechnik hergestellt ist, beträgt seine Dicke vorzugsweise unter 20 Mikrometer, beispielsweise sieben Mikrometer. Es kann aber auch ein wesentlich dickerer Halbleiterchip eingesetzt werden, der beispielsweise eine Dicke von 150 Mikrometern aufweist. Mit seiner Oberseite ist der Halbleiterchip 1 mit einer Abdeckschicht 2 verbunden, die aus einem optisch transparenten oder teiltransparenten Material besteht. Die Abdeckschicht 2 übernimmt die Funktion, das von dem Halbleiterchip 1 emittierte Licht auf eine große Fläche zu verteilen, so dass es beispielsweise zur Hinterleuchtung eines Displays verwendet werden kann. Die Abstrahlrichtung des Halbleiterchips 1 an seine Oberfläche 3 ist hauptsächlich senkrecht zu seiner lichtemittierenden Oberseite beziehungsweise Unterseite und nicht in Richtung der Längserstreckung der Abdeckschicht 2. Im Bereich des Halbleiterchips ist eine lichtumlenkende Struktur 4 vorgesehen, durch die das Licht umgelenkt wird um sich so in der Abdeckschicht auszubreiten, wobei die Abdeckschicht als Lichtleiterplatte bzw. -folie wirkt.

Als Material für die Abdeckschicht können optisch klare, transparente Materialien verwendet werden, aber auch halbklare, transparente Materialien beispielsweise mit einer Schleierwirkung können zum Einsatz kommen, wobei die Schleierwirkung beispielsweise durch Inhomogenitäten im Material verursacht ist. Wichtig ist, dass es sich um durchscheinende Materialien handelt, die beispielsweise auch Leuchtstoffe enthalten können. Die Abdeckschicht weist vorzugsweise eine Dicke zwischen 30 Mikrometer und 300 Mikrometern auf.

Die Anordnung nach Figur 1 ist dazu eingereichtet, Licht hauptsächlich nach oben abzustrahlen. Deswegen ist auf der Unterseite der Abdeckschicht 5 eine Verspiegelung 6 vorgesehen, so dass verhindert ist, dass Licht nach unten die Abdeckschicht 2 verlässt. Licht kann somit lediglich an der Oberseite 5 austreten. Je nach Aufbau des Halbleiterchips 1 ist vorgesehen, dass dieser an seiner Unterseite ebenfalls eine lichtreflektierende Schicht aufweist, um so eine Abstrahlung nach unten zu verhindern. Stattdessen soll sämtliches Licht in die Abdeckschicht 2 eingekoppelt und in Richtung deren Längserstreckung umgelenkt werden.

In Figur 2 ist dargestellt, wie verhindert werden kann, dass Licht überwiegend in Hauptabstrahlrichtung des Halbleiterchips 1 auf der Oberseite der Abdeckschicht 2 sichtbar wird. Dazu ist auf der Oberseite der Abdeckschicht 2 im Bereich oberhalb des Halbleiterchips eine Verspiegelung 7 vorgesehen, die dort auftreffendes Licht wieder nach unten reflektiert und somit die Möglichkeit gibt, das Licht weiter in Längserstreckung der Abdeckschicht 2 umzulenken. Auf diese Weise ist verhindert, dass in dem Bereich des Halbleiterchips 1 ein Leuchtfleck auf der Oberseite der Abdeckschicht sichtbar ist.

In der Darstellung der Figur 2 ist der Halbleiterchip mit zwei Kontaktflächen 8 versehen, um den Halbleiterchip mit einem Betriebsstrom zu versorgen. Die Anordnung der Kontaktflächen ist schematisch zu sehen, selbstverständlich müssen die Kontakte mit den für eine Stromversorgung relevanten Bereichen des Halbleiterchips verbunden werden, das heißt eine der Kontaktflächen muss mit der oberen Schicht des Halbleiterchips 1 in Verbindung stehen. Diese Anmerkung gilt auch für die weiteren Figuren, die nachfolgend beschrieben werden. Der Spalt zwischen dem Halbleiterchip und der Abdeckschicht 2 kann mit einem Koppelmedium 12 ausgefüllt sein, um eine Verbindung zwischen Halbleiterchip 1 und Abdeckschicht 2 herzustellen.

Der im Ausführungsbeispiel von Figur 2 gezeigte Chip besitzt zwei Kontaktflächen, die beide auf der Unterseite des Chips 1 angeordnet sind. Andere Chips sind so aufgebaut, dass eine Kontaktierung auf der Oberseite und eine auf der Unterseite erfolgen muss. Bei derartigen Chips wird die Koppelschicht 12 vorzugsweise genutzt, um dort optisch transparente, aber elektrisch leitfähige Strukturen anzuordnen, die zur Kontaktierung der Oberseite des Halbleiterchips 1 dienen.

Die in der Figur 2 gezeigte lichtleitende Folie besteht aus der Abdeckschicht 2 einerseits und einer zweiten Schicht 10 andererseits, so dass eine zweilagige Folie gebildet ist. Die Grenzfläche zwischen der Abdeckschicht 2 und der darunter liegenden Schicht 10, die den unteren Abschluss der Abdeckschicht 2 bildet, sowie die Unterseite dieser Schicht 10 können strukturiert oder beschichtet sein, um den Strahlengang des Lichts in der Abdeckschicht 2 in der gewünschten Weise zu beeinflussen.

Bei dem in der Figur 3 gezeigten Vergleichsbeispiel sind in der Abdeckschicht 3 in dem Bereich oberhalb des Halbleiterchips 1 Prismen 9 ausgebildet, die aufgrund eines Sprungs des Brechungsindex an den durch die Prismen gebildeten Grenzflächen das vom Halbleiterchip 1 emittierte Licht in Richtung der Längserstreckung der Abdeckschicht 2 brechen. Die Wirkungsweise des anhand eines Lichtstrahles exemplarisch dargestellt. Während das Material der Abdeckschicht 2 einen verhältnismäßig hohen Brechungsindex aufweist, muss auf der anderen Seite der Grenzfläche ein Material mit einem möglichst geringen Brechungsindex vorliegen. Es kann sich auch einfach um Luft handeln, wenn die bei der Herstellung der Prismen hergestellten Vertiefungen nicht mit einem anderen Material aufgefüllt werden, sondern offen bleiben.

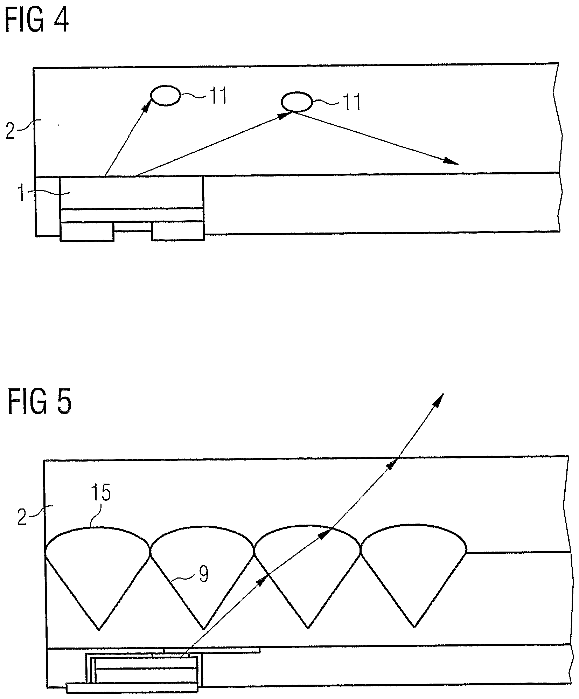

Bei dem in der Figur 4 dargestellten Vergleichsbeispiel sind in der Abdeckschicht 2 Diffusorpartikel 11 vorgesehen, die eine Streuung des vom Halbleiterchip 1 emittierten Lichts bewirken. Diffusorpartikel bestehen beispielsweise aus Titandioxid. Dieses hat einen hohen Brechungsindex von zirka 2,8, was bewirkt, dass an den Grenzflächen der Diffusorpartikel zu dem Material der Abdeckschicht 2 Totalreflexionen oder zumindest starke Brechungen auftreten, so dass auftreffendes Licht umgelenkt wird.

Bei dem Vergleichsbeispiel von Figur 5 ist eine zweilagige Abdeckschicht 2 vorgesehen. Die untere Schicht ist mit Prismen wie anhand von Figur 3 beschrieben ausgestattet, während die obere Schicht konkave Vertiefungen 15 aufweist, die den Prismen-Vertiefungen gegenüberliegen. Die Vertiefungen in der oberen Schicht wirken als Linsen und können eingesetzt werden, um die Abstrahlcharakteristik zusätzlich zu beeinflussen.

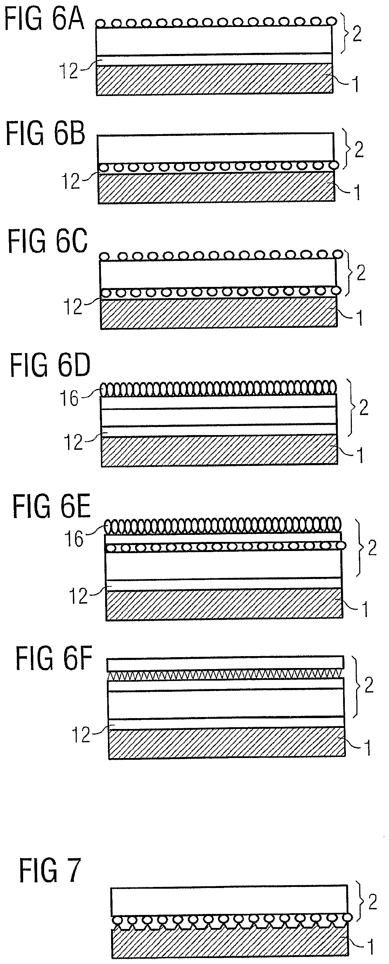

In den Figuren 6A bis 6F sind verschiedene lichtumlenkende Strukturen gezeigt, welche dazu dienen das vom Halbleiterchip 1 abgestrahlte Licht in Längserstreckung der Abdeckschicht umzulenken. Gemeinsam ist den verschiedenen Vergleichsbeispielen, dass ein Halbleiterchip 1 über eine Koppelschicht 12 mit der Abdeckschicht 2 verbunden ist. Unterschiedlich ist die jeweilige Ausgestaltung der Abdeckschicht 2.

In Figur 6A ist als Abdeckschicht 2 eine transparente Folie, zum Beispiel eine Glasfolie, vorgesehen, die auf der Oberseite optisch strukturiert ist. Nach Figur 6B ist die Glasfolie auf der Unterseite optisch strukturiert. Nach Figur 6C ist die optische Strukturierung sowohl auf der Unterseite als auch auf der Oberseite vorgesehen. Die Strukturierung kann dabei so ausgestaltet sein, dass die Auskoppeleffizienz des Chips erhöht wird. In der Figur 6D ist ein Vergleichsbeispiel gezeigt, in dem auf der Oberseite eine schematisch dargestellte Schicht aus einem photonischen Kristall vorgesehen ist. In der Figur 6E ist eine Anordnung gezeigt, bei der sowohl eine optische Strukturierung innerhalb der Abdeckschicht vorgesehen ist als auch ein photonischer Kristall auf der Oberseite.

In der Figur 6F ist eine vorteilhafte Ausführung gezeigt, bei der zusätzlich eine Konverterschicht und die elektrischen Schichten vorgesehen sind.

Bei der Ausgestaltung nach der Figur 7 ist die Oberfläche des Halbleiterchips 1 mit einer Aufraustruktur versehen und in Kontakt mit einer strukturierten Seite einer Abdeckschicht 2 gebracht. Durch die unterschiedlichen Grenzflächenkombinationen wird die Lichtverteilung in der Abdeckfolie 2 beeinflusst. Dabei sind reguläre oder zufällig strukturierte Oberflächen möglich.

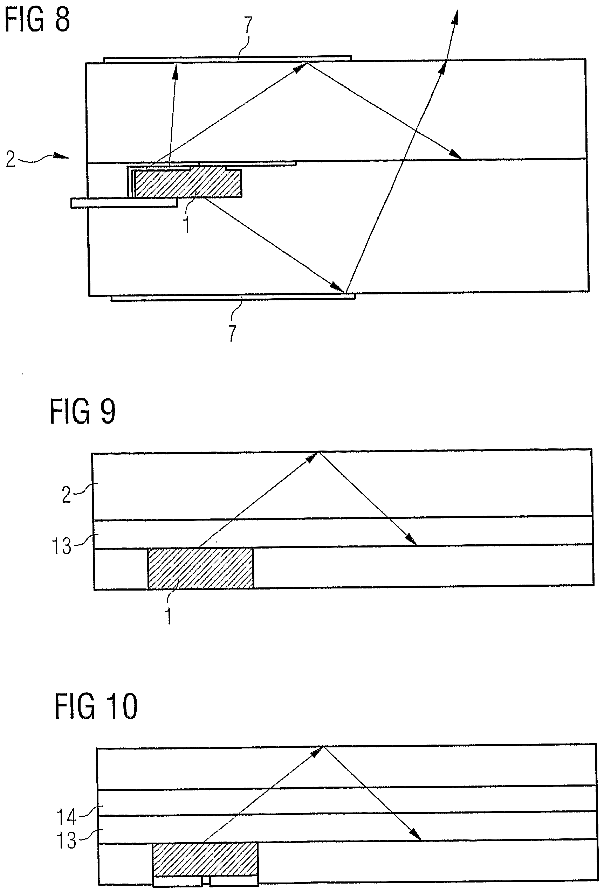

In der Figur 8 ist ein erfindungsgemäßes Ausführungsbeispiel gezeigt, wobei ein zweiseitig emittierender, substratloser Halbleiterchip in Dünnfilmtechnik gezeigt ist, der von beiden Seiten abgedeckt ist. Vorteilhaft bei dieser Ausgestaltung ist, dass keine Verluste in einem Substrat entstehen, sondern das nach beiden Seiten abgestrahlte Licht genutzt werden kann. Sowohl das nach oben als auch das nach unten abgestrahlte Licht wird an Verspiegelungen 7 reflektiert und dadurch in Längsrichtung der Abdeckschicht 2 gezwungen, die eine Lichtleiterfolie bildet.

In den Figuren 9 und 10 ist gezeigt, dass die Anordnung auch mit Konverterschichten eingesetzt werden kann, die einen Teil der vom Halbleiterchip erzeugten Primärstrahlen in Sekundärstrahlung umwandeln, wobei Mischlicht aus der Primär- und Sekundärstrahlung abgestrahlt wird. Dabei kann es sich um weißes Licht handeln, das aus blauer Primärstrahlung und gelber Sekundärstrahlung besteht. Die Konverterschicht 13 ist dabei zwischen dem Halbleiterchip 1 und der Abdeckschicht 2 angeordnet. Als Konvertermaterial wird vorzugsweise ein anorganischer Leuchtstoff eingesetzt. Bei der Ausgestaltung nach Figur 10 sind zwei Konverterschichten vorgesehen, um eine komplexere Farbmischung zu ermöglichen. Auch kann die zweite Konverterschicht dazu genutzt werden, einen UV-Anteil in der primären Strahlung in sichtbares Licht umzuwandeln, um so einen höheren Wirkungsgrad zu erzielen.

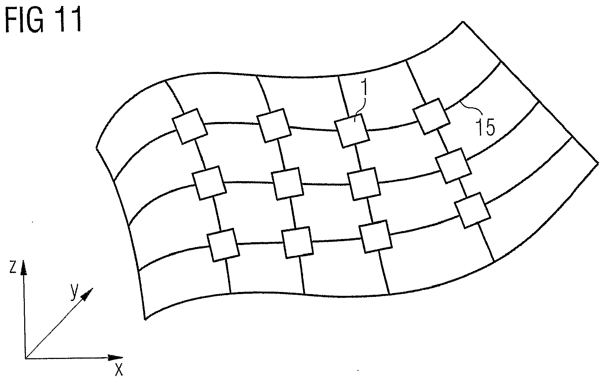

Wie in Figur 11 gezeigt lassen sich in Kombination mit flexiblen Leiterbahnen 15 dünne, flächige, dreidimensional gestaltbare Beleuchtungselemente erzeugen. So kann beispielsweise eine zylinderförmige Anordnung hergestellt werden, die über die gesamte Mantelfläche Licht abstrahlt. Auch lassen sich Hinterleuchtungen herstellen, die einer gekrümmten Oberfläche folgen. Eine beispielhafte Anwendung ist der Einsatz in Autoscheinwerfern oder Rücklichtern. Aber auch in der Allgemeinbeleuchtung sind derartige Beleuchtungselemente aufgrund ihrer dreidimensionalen Verformbarkeit vielfältig einsetzbar.

Die verschiedenen in den Ausführungsbeispielen beschriebenen Maßnahmen zur Umlenkung des von dem Halbleiterchip erzeugten Licht in Längserstreckung der Abdeckschicht können miteinander kombiniert werden, um so eine optimale Wirkungsweise zu erzielen. Weitere Ausgestaltungen der Erfindung sind, auch wenn sie nicht explizit beschrieben wurden, von der Erfindung umfasst und liegen im Ermessen des Fachmannes.

## Patentansprüche

1. Anordnung mit einem Halbleiterchip (1), der dazu eingerichtet ist, im Betrieb Licht zu emittieren, und
einer Abdeckschicht (2), die einer Licht abstrahlenden Oberfläche auf einer Oberseite des Halbleiterchips (1) gegenüberliegt, sodass von dem Halbleiterchip (1) abgestrahltes Licht in die Abdeckschicht (2) eindringt, wobei in einem sich mit dem Chip überschneidenden Bereich der Abdeckschicht (2) eine Verspiegelung (7) vorgesehen ist, durch die in die Abdeckschicht (2) eingedrungenes Licht in Richtung der Längserstreckung der Abdeckschicht (2) umgelenkt wird, und die Abdeckschicht (2) als Lichtleiter wirkt und dazu eingerichtet ist, das Licht verteilt über die Oberseite (5) der Abdeckschicht (2) abzustrahlen, wobei
die in Richtung der Abdeckschicht (2) weisende Richtung eine Hauptabstrahlrichtung des Halbleiterchips (1) ist, und
der Halbleiterchip (1) zwei Hauptabstrahlrichtungen aufweist, die entgegengesetzt liegen,
**dadurch gekennzeichnet, dass**
der Halbleiterchip (1) auch von unten mit der Abdeckschicht (2) abgedeckt ist, und das vom Halbleiterchip (1) nach oben und unten abgestrahlte Licht genutzt und an Verspiegelungen (7) auf der Abdeckschicht (2) reflektiert wird und dadurch in Längsrichtung der Abdeckschicht (2) gezwungen wird.

2. Anordnung nach Anspruch 1,
**dadurch gekennzeichnet, dass**
der Halbleiterchip (1) ein Dünnfilm-Chip ist, insbesondere ein substratloser Dünnfilm-Chip, wobei
die Dicke des Halbleiterchips (1) zwischen 7 und 150 µm liegt, vorzugsweise zwischen 7 und 20 µm.

3. Anordnung nach Anspruch 1,
**dadurch gekennzeichnet, dass**
die Abdeckschicht (2) eine Folie ist, vorzugsweise aus einem optisch klaren transparenten Material oder einem halbklaren transparenten Material oder aus durchscheinenden Materialien.

4. Anordnung nach Anspruch 1,
**dadurch gekennzeichnet, dass**
auf der dem Halbleiterchip (1) abgewandten Oberseite der Abdeckschicht (2) eine Verspiegelung (7) vorgesehen ist, die insbesondere im Wesentlichen die Größe der Licht abstrahlenden Oberfläche des Halbleiterchips (1) aufweist.

5. Anordnung nach Anspruch 1,
**dadurch gekennzeichnet, dass**
auf der in Richtung des Halbleiterchips (1) weisenden Seite der Abdeckschicht (2) eine Verspiegelung (6) außerhalb des Bereichs des Halbleiterchips (2) vorgesehen ist.

6. Anordnung nach Anspruch 1,
**dadurch gekennzeichnet, dass**
die Abdeckschicht (2) in direktem Kontakt mit der Oberfläche des Halbleiterchips (1) ist.

7. Anordnung nach Anspruch 1,
**dadurch gekennzeichnet, dass**
in die Abdeckschicht (2) optische Elemente (7, 9, 11, 15, 16) integriert sind zur Lichtumlenkung, insbesondere Prismen (9), Linsen (15) oder Beugungsgitter.

8. Anordnung nach Anspruch 1,
**dadurch gekennzeichnet, dass**
zur Lichtumlenkung eine Schicht (16) aus einem photonischen Kristall vorgesehen ist.

9. Anordnung nach Anspruch 1,
**dadurch gekennzeichnet, dass**
als Abdeckschicht (2) eine Kombination mehrerer Folien vorgesehen ist, die eine unterschiedliche Strukturierung und/oder unterschiedliche Brechungsindizes aufweisen.

10. Anordnung nach Anspruch 1,
**dadurch gekennzeichnet, dass**
zwischen der Abdeckschicht (2) und der Oberfläche des Halbleiterchips (1) eine Schicht (12) aus einem Koppelmedium vorgesehen ist.

11. Anordnung nach Anspruch 10,
**dadurch gekennzeichnet, dass**
die Schicht (12) zwischen der Oberfläche des Halbleiterchips (1) und der Abdeckschicht (2) eine elektrisch leitende, optische Struktur beinhaltet zur elektrischen Kontaktierung des Halbleiterchips (2).

12. Anordnung nach Anspruch 1,
**dadurch gekennzeichnet, dass**
in der Abdeckschicht (2) ein Konvertermaterial vorgesehen ist, welches aus einem Leuchtstoff besteht, der nach Anregung von Licht einer ersten Wellenlänge Licht einer zweiten Wellenlänge emittiert.

13. Anordnung nach Anspruch 1,
**dadurch gekennzeichnet, dass**
sowohl eine Strukturierung der Abdeckschicht als auch eine Schicht (15) aus einem photonischen Kristall vorgesehen ist.

## Claims

1. An arrangement comprising a semiconductor chip, designed to emit light during operation, and
a cover layer, that lies across from a light emitting upper surface of the semiconductor chip so that light emitted from the semiconductor chip penetrates into the cover layer,
wherein a light deflecting structure disposed in an area of the cover layer overlapping the chip, wherein light penetrating into the cover layer is deflected in a direction of a longitudinal extent of the cover layer, and the cover layer acts as an optical waveguide and is designed to emit the light distributed over the surface of the cover layer, wherein
a direction pointing in a direction of the cover layer is a main emitting direction of the semiconductor chip, and
the semiconductor chip has two main emitting directions, which are opposed to each other, **characterized in that**
the semiconductor chip is also covered from the bottom by the cover layer, and the light emitted upward and downward from the semiconductor chip (1) is used and reflected on reflective coatings (7) on the covering layer (2) and the light is thereby forced in the longitudinal direction of the covering layer (2).

2. Arrangement according to claim 1,
**characterized in that**
the semiconductor chip (1) is a thin-film chip, in particular a substrateless thin-film chip, wherein
the thickness of the semiconductor chip (1) is between 7 and 150 µm, preferably between 7 and 20 µm.

3. Arrangement according to claim 1,
**characterized in that**
the cover layer (2) is a film, preferably of an optically clear transparent material or a semi-clear transparent material or of translucent materials.

4. Arrangement according to claim 1,
**characterized in that**
on the semiconductor chip (1) facing away from the top of the cover layer (2) a reflective coating (7) is provided, which in particular has substantially the size of the light-emitting surface of the semiconductor chip (1).

5. Arrangement according to claim 1,
**characterized in that**
on side of the cover layer (2), which faces in the direction of the semiconductor chip (1) a reflective coating (6) is provided outside the region of the semiconductor chip (2).

6. Arrangement according to claim 1,
**characterized in that**
the cover layer (2) is in direct contact with the surface of the semiconductor chip (1).

7. Arrangement according to claim 1,
**characterized in that**
in the cover layer (2) optical elements (7, 9, 11, 15, 16) are integrated for light deflection, in particular prisms (9), lenses (15) or diffraction gratings.

8. Arrangement according to claim 1,
**characterized in that**
for the deflection of light, a layer (16) of a photonic crystal is provided.

9. Arrangement according to claim 1,
**characterized in that**
as cover layer (2) is provided a combination of a plurality of films having a different structuring and/or different refractive indices.

10. Arrangement according to claim 1,
**characterized in that**
between the cover layer (2) and the surface of the semiconductor chip (1) is provided a layer (12) of a coupling medium.

11. Arrangement according to claim 10,
**characterized in that**
the layer (12) between the surface of the semiconductor chip (1) and the cover layer (2) comprises an electrically conductive, optical structure for electrically contacting the semiconductor chip (2).

12. Arrangement according to claim 1,
**characterized in that**
in the cover layer (2) a converter material is provided, which consists of a phosphor which emits light of a second wavelength after excitation of light of a first wavelength.

13. Arrangement according to claim 1,
**characterized in that**
both a structuring of the cover layer and a layer (15) of a photonic crystal is provided.

## Revendications

1. Agencement doté d'une puce semi-conductrice (1) destinée à émettre de la lumière en mode de fonctionnement, et
d'une couche de revêtement (2), située en face d'une surface rayonnant de la lumière, sur une face supérieure de la puce semi-conductrice (1) de telle sorte que de la lumière rayonnée par la puce semi-conductrice (1) pénètre dans la couche de revêtement (2), étant prévu dans une zone de la couche de revêtement (2) qui se chevauche avec la puce un réfléchissement (7) par lequel de la lumière ayant pénétré dans la couche de revêtement (2) est déviée dans le sens de la longueur de la couche de revêtement (2), et la couche de revêtement (2) ayant un effet de conducteur optique et étant destinée à rayonner la lumière sur toute la face supérieure (5) de la couche de revêtement (2), la direction allant dans le sens de la couche de revêtement (2) étant une direction principale de rayonnement de la puce semi-conductrice (1) et la puce semi-conductrice (1) présentant deux directions principales de rayonnement opposées l'une à l'autre,
**caractérisé en ce que**
la puce semi-conductrice (1) est aussi revêtue par en dessous par la couche de revêtement (2), la lumière rayonnée par la puce semi-conductrice (1) vers le haut et vers le bas est utilisée et réfléchie au niveau de réfléchissements (7) sur la couche de revêtement (2), et ainsi dirigée dans le sens de la longueur de la couche de revêtement (2).

2. Agencement selon la revendication 1,
**caractérisé en ce que**
la puce semi-conductrice (1) est une puce à couche mince, notamment une puce à couche mince sans substrat,
l'épaisseur de la puce semi-conductrice (1) étant de 7 à 150 µm, de préférence de 7 à 20 µm.

3. Agencement selon la revendication 1,
**caractérisé en ce que**
la couche de revêtement (2) est un film, de préférence en matériau transparent optiquement clair, en matériau transparent mi-clair ou en matériaux translucides.

4. Agencement selon la revendication 1,
**caractérisé en ce qu'**
est prévu sur la face supérieure de la couche de revêtement (2) du sens opposé à la puce semi-conductrice (1) un réfléchissement (7) qui présente notamment sensiblement la taille de la surface de la puce semi-conductrice (1) rayonnant de la lumière.

5. Agencement selon la revendication 1,
**caractérisé en ce qu'**
est prévu sur la face de la couche de revêtement (2) tournée vers la puce semi-conductrice (1) un réfléchissement (6) à l'extérieur de la zone de la puce semi-conductrice (2).

6. Agencement selon la revendication 1,
**caractérisé en ce que**
la couche de revêtement (2) est en contact direct avec la surface de la puce semi-conductrice (1).

7. Agencement selon la revendication 1,
**caractérisé en ce que**
sont intégrés dans la couche de revêtement (2) des éléments optiques (7, 9, 11, 15, 16) de déviation de lumière, notamment des prismes (9), des lentilles (15) ou des réseaux de diffraction.

8. Agencement selon la revendication 1,
**caractérisé en ce qu'**
une couche composée d'un cristal photonique est prévue pour dévier la lumière.

9. Agencement selon la revendication 1,
**caractérisé en ce qu'**
en tant que couche de revêtement (2) est prévue une combinaison de plusieurs films qui présentent une structuration différente et/ou des indices de réfraction différents.

10. Agencement selon la revendication 1,
**caractérisé en ce qu'**
entre la couche de revêtement (2) et la surface de la puce semi-conductrice (1), une couche (12) composée d'un support de couplage est prévue.

11. Agencement selon la revendication 10,
**caractérisé en ce que**
la couche (12) située entre la surface de la puce semi-conductrice (1) et la couche de revêtement (2) contient une structure optique conductrice électrique pour établir un contact électrique avec la puce semi-conductrice (2).

12. Agencement selon la revendication 1,
**caractérisé en ce que**
dans la couche de revêtement (2) est prévu un matériau convertisseur constitué d'une substance luminescente qui émet, sur excitation de lumière d'une première longueur d'onde, de la lumière d'une deuxième longueur d'onde.

13. Agencement selon la revendication 1,
**caractérisé en ce que**
sont prévues aussi bien une structuration de la couche de revêtement qu'une couche (15) composée d'un cristal photonique.
